**Europäisches Patentamt**

**European Patent Office**

**Office européen des brevets**

(19)

(11) Veröffentlichungsnummer: **0 104 369**

**B1**

(12) **EUROPÄISCHE PATENTSCHRIFT**

(45) Veröffentlichungstag der Patentschrift: **17.05.89**

(21) Anmeldenummer: **83107666.6**

(22) Anmeldetag: **04.08.83**

(51) Int. Cl.⁴: **B 07 C 5/342,** G 06 F 15/70, B 07 C 5/10

(54) **Einrichtung und Verfahren zum optischen Erkennen von Flächenmustern an Objekten.**

(30) Priorität: **30.08.82 DE 3232179**

(43) Veröffentlichungstag der Anmeldung:
**04.04.84 Patentblatt 84/14**

(45) Bekanntmachung des Hinweises auf die Patenterteilung:
**17.05.89 Patentblatt 89/20**

(84) Benannte Vertragsstaaten:
**AT BE CH DE FR GB LI NL SE**

(56) Entgegenhaltungen:
**EP-A-0 039 882**
**EP-A-0 067 244**
**DE-A-2 507 173**
**DE-A-2 534 235**
**DE-A-2 949 591**
**DE-B-2 901 970**
**FR-A-2 455 264**

(73) Patentinhaber: **Pietzsch Aktiengesellschaft Hertzstrasse 32-34 D-7505 Ettlingen (DE)**

(72) Erfinder: **Pietzsch, Ludwig, Dr. Im Rosengärtle 14 D-7500 Karlsruhe 41 (DE)**
Erfinder: **Peter, Kurt, Prof. Dr.-Ing. Kniebisstrasse 5 D-7505 Ettlingen 6 (DE)**
Erfinder: **Kauer, Harald, Dr.-Ing. Schauinslandstrasse 6 D-7505 Ettlingen 6 (DE)**
Erfinder: **Rössler, Jürgen, Dr.-Ing. Wutachweg 5 D-7505 Ettlingen 5 (DE)**

(74) Vertreter: **Liesegang, Roland, Dr.-Ing. et al FORRESTER & BOEHMERT Widenmayerstrasse 4 D-8000 München 22 (DE)**

Courier Press, Leamington Spa, England.

# EP 0 104 369 B1

**Beschreibung**

Die Erfindung betrifft eine Einrichtung mit den Merkmalen des Oberbegriffs des Anspruchs 1 sowie ein Verfahren mit den Merkmalen des Oberbegriffs des Anspruchs 10. Bei einer bekannten Einrichtung und einem Verfahren dieser Art (DE—OS—25 07 173) wird ein Bild eines Objektes, wie ein Diapositiv, in festgehaltenem Zustand mittels einer Fernsehkamera oder dgl., zum Erzeugen von Videosignalen abgetastet. Dabei repräsentiert ein Mittelwert der je Zeile aufgenommenen Bildsignale ein Integral der Helligkeit auf jeder Zeile, mit anderen Worten eine mittlere Helligkeit.

Bie einer bekannten Vorrichtung zum optischen Erkennen von Flächenmustern an Objecten (DE—A—29 49 591) wird ein beleuchteter Objektträger in bewegtem Zustand mittels eines Fotodiodenzeilen-Sensors abgetastet. Die aufgenommenen Bildsignale werden in einer Auswertvorrichtung in Echtzeit verarbeitet. Bei einer anderen bekannten Vorrichtung werden die bewegten Objekte mittels einer Videokamera zeilenweise aufgenommen. Fehlobjekte werden in Echtzeit erkannt und ausgeschieden (DE—B—29 01 970).

Wenn ein Objekt in bewegtem Zustand abgetastet werden soll, führt dies bei Anwendung einer Videoabtastung zu Echtzeitproblemen, weil nicht nur die Abtastgeschwindigkeit im Vergleich zur Geschwindigkeit der an der videokamera vorbeibewegten Objekte sehr groß sein müßte, sondern auch eine Flächenintegration in Echtzeit realisiert werden müßte, was allenfalls durch aufwendige nachgeschaltete Zusatzeinrichtungen realisierbar erscheint.

Es ist ferner eine Einrichtung zum Prüfen der richtigen Lage und/oder der Abmessungen eines durch den Strahlengang zwischen einer Fotodiode und einer Leuchtdiode bewegten Werkstückes bekannt (DE—A—29 16 862). Hier wird im sogenannten "Durchlichtverfahren" lediglich der Umriß eines Werkstückes erkannt, nicht aber Helligkeitsschattierungen auf einer Oberfläche. Hierzu ist ein Durchlichtverfahren nicht geeignet.

Es ist weiterhin zum Erkennen der Lage eines Linienmusters, insbesondere zur Erkennung der Oberflächengeometrie eines Halbleiter-Bauelementes eine Einrichtung bekannt (DE—A—30 18 170), welche ein aus einer vorgegebenen begrenzten Anzahl von Linienmustern ausgewähltes Muster sowie dessen Lage zu einem definierten Nullpunkt durch Umsetzen von Bildpunkten in elektrische Signalfolgen und Vergleich dieser Signalfolgen mit Signalen eines gespeicherten Musters in Echtzeit auffinden läßt (DE—A—30 18 170).

Es ist schließlich eine Anordnung zum spaltenweisen Abtasten von Mustern mit Hilfe von Fotodiodenzeilen zu dem Zwecke bekannt, Abtastsignale zu gewinnen, die als Eichnormale bei der Berechnung von Korrekturwerten von Bildsignalen verwendet werden können. Hierbei werden in einem Speicher Signale zwischengespeichert und die zwischengespeicherten Werte zur anschließenden Berechnung der Korrekturwerte verwendet. Es wird also nicht in Echtzeit gearbeitet (DE—A—25 34 235).

Der Erfindung liegt die Aufgabe zugrunde, eine Einrichtung der im Oberbegriff des Anspruchs 1 genannten Art zu schaffen, welche mit geringstmöglichem Aufwand eine schnelle und eindeutige Erkennung eines Flächenmusters auf einem bewegten Objekt durch Grauwertanalyse in Echtzeit ermöglicht.

Zur Lösung dieser Aufgabe sind bei einer Einrichtung der eingangs genannten Art die Kennzeichnenden Merkmale des Anspruchs 1 vorgesehen.

Mit der Einrichtung nach der Erfindung läßt sich das Objekt streifenweiseabtasten, wobei im Gegensatz zu einer Videoaufnahme Streifen an Streifen einander berührend bzw. überlappend angeordnet werden können, so daß die Gesamtfläche des Objektes bei der Aufnahme erfaßt wird. Die Integration der Helligkeitswerte jeder Fotodioden-Zeilenaufnahme erfolgt gleichzeitig mit der Aufnahme. Das Auswählen bestimmter Grauwert-Amplitudensignale an geeigneten Stellen der Grauwertfunktion, insbesondere an besonders charakteristischen Stützstellen wie Orten von Maxima und/oder Minima der Grauwertfunktion vermindert die Datenmenge in einer Weise, daß Aufnahme und Vergleich in Echtzeit am bewegten Objekt erfolgen können.

Die gemäß einer vorteilhaften Ausgestaltung der Erfindung vorgesehene Aufspaltung des Fotodiodenzeilensensors in mehrere Gruppen von Einzelsensoren, welche das Flächenmuster in mehreren parallelen, vorzugsweise in Bewegungsrichtung des Objektes verlaufenden Spuren aufnehmen, wobei je Sensorengruppen, d.h. Spur, eine gesonderte Auswertvorrichtung vorgesehen ist, arbeitet genauer dann, wenn die Stützstellenanzahl entsprechend vergrößert ist, und schneller, wenn die gleich Anzahl von Stützstellen beim Abtasten und Verarbeiten über die ganze Breite gewählt wird, weil in diesem Fall jede der Auswertvorrichtungen nur einen entsprechenden Bruchteil der sonst zu verarbeitenden Datenmenge zu verarbeiten hat.

Die Einrichtung nach der Erfindung eignet sich insbesondere zum Erkennen der Titelseiten von Druckerzeugnissen, wie Zeitschriften. Sie ermöglicht in diesem Zusammenhang ein Ordnen von in regelloser Folge auf einem Förderband abgelegten, an der Einrichtung vorbeigeführten Zeitschriften.

Das Verfahren zum Optischen Erkennen von Flächenmustern an Objektiv gemäß dem Oberbegriff des Anspruchs 10 zeichnet sich erfindungsgemäß durch die kennzeichnenden Merkmale des Anspruchs 10 aus.

Die Erfindung ist im folgenden anhand schmetischer Zeichnungen an Ausführungsbeispielen mit weiteren Einzelheiten näher erläutert. Es zeigen:

2

Fig. 1 ein vereinfachtes Schema mit einem Objekt und einem Sensor zum Erfassen des Grauwertes dieses Objektes in einem Koordinatensystem;

Fig. 2 ein Diagramm, welches die mit dem Sensor nach Fig. 1 erfaßte Grauwertverteilung in Richtung quer zum Objekt darstellt;

Fig. 3 ein Diagramm, welches die Grauwertverteilung in Längs- bzw. Bewegungsrichtung des Objektes nach Fig. 1 darstellt;

Fig. 4 ein Diagramm entsprechend Fig. 3, wobei die Grauwertverteilung an äquidistanten Stützstellen dargestellt ist;

Fig. 5 in einem Diagramm ähnlich Fig. 3 die Grauwertverteilung mit Anordnung der Stützstellen an den Maxima und Minima;

Fig. 6 eine schematische Darstellung einer in Bewegungsrichtung des Objektes mehrspurigen Erfassung des Grauwertes;

Fig. 7 eine Darstellung der Grauwertverteilung ähnlich Fig. 2, jedoch bei Anwendung der mehrspurigen Erfassung nach Fig. 6;

Fig. 8a, 8b und 8c Frontansicht, Unteransicht und Seitenansicht einer schematisierten Sensorzeilenanordnung;

Fig. 9 ein Blockschaltbild einer Vorrichtung gemäß der Erfindung;

Fig. 10 den Aufbau einer in der Vorrichtung nach Fig. 9 mehrfach verwendeten Auswertvorrichtung gemäß der Erfindung im einzelnen;

Fig. 11 ein Flußdiagramm einer automatischen Verteileranlage für Druckerzeugnisse mit einer darin verwendeten Erkennungsvorrichtung gemäß der Erfindung.

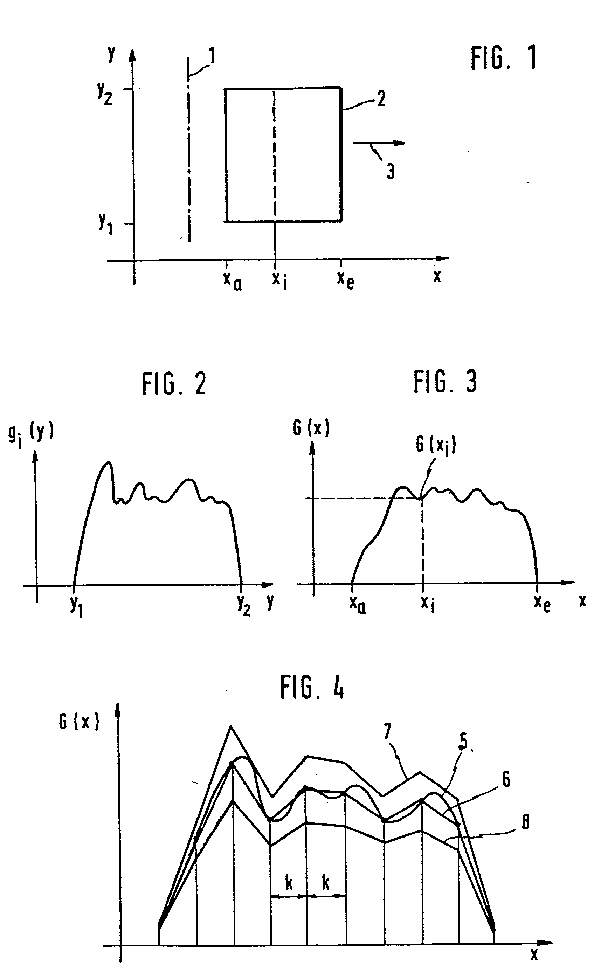

Anhand der Fig. 1 bis 3 sei nun zunächst die grundsätzliche Vorgehensweise bei einem Grauwerterkennungs-Verfahren gemäß der Erfindung beschrieben.

In Fig. 1 ist mit dem Bezugszeichen 1 schematisch eine Sensorzeile und mit dem Bezugszeichen 2 ein an dieser Sensorzeile vorbei in Richtung des Pfeiles 3 bewegtes Objekt bezeichnet. In dem eingezeichneten Koordinatensystem beschreibt $y_2-y_1$ die Breite und $x_e-x_a$ die Länge des Objektes 2. Dieses Objekt trägt ein Flächenmuster. Beispielsweise handelt es sich bei dem Objekt um eine Zeitschrift, und das Flächenmuster wird von der bedruckten Titelseite dieser Zeitschrift repräsentiert.

Fig. 2 zeigt das Ergebnis einer Bildaufnahme mit der Sensorzeile 1 in Form des Amplitudenverlaufes des Grauwertes an der Koordinate $x_i$ in Breitenrichtung y des Objektes 2 gemäß Fig. 1. Integriert man die Fläche unter dieser Grauwertverteilung in Fig. 2, so erhält man einen Zahlenwert, der die Grauwertverteilung an der Längenkoordinate $x_i$ repräsentiert. Bei Erfassen und Aufzeichnen für alle Längenko-ordinaten zwischen Objektanfang $x_a$ und -ende $x_e$ erhält man die Kurve nach Fig. 3, die folglich eine eindimensionale Darstellung der Grauwertverteilung über die gesamte Fläche des Objektes 2, d.h. in Breitenrichtung y und in Längenrichtung x, repräsentiert.

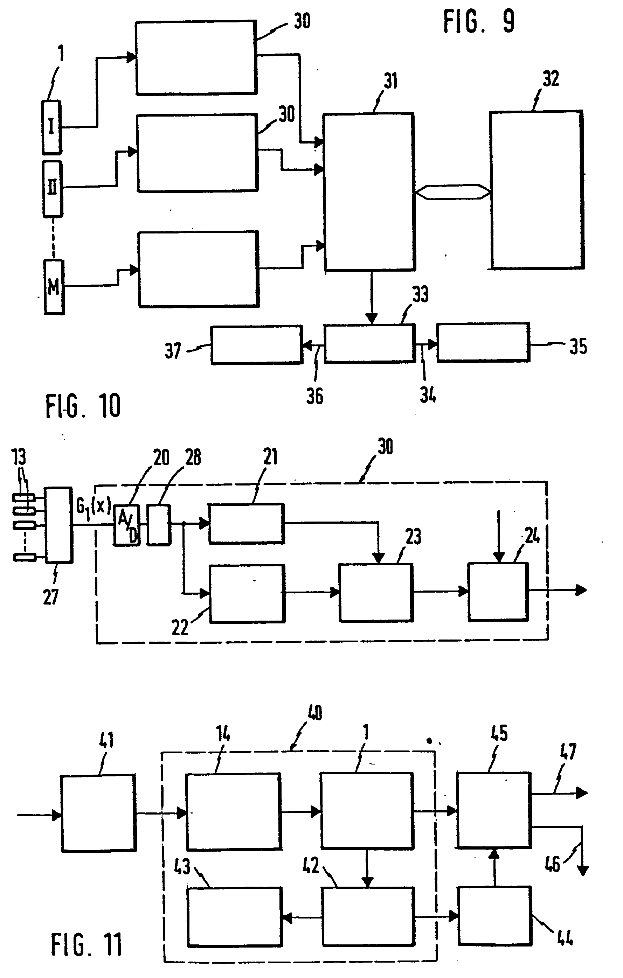

Die Grauwertfunktion G(x) bildet ein analoges Ausgangssignal des Sensors 1, welches über einen A/D-Wandler 20 einer Auswerteelektronik 30 zugeführt wird (Fig. 9). Das mit einer Frequenz f abgetastete Signal $G(x)=G(x(t))$ kann dann als Zahlenfolge $G(nT)$, $n=0, 1 \ldots n_{Max}$, mit den Beziehungen

$$I=f^{-1},$$

Abtastperiode

$$n_{max}=\frac{x_e-x_a}{v_{rel}} \cdot f$$

$x_a=x\ (t=t_a)$
$x_e=x\ (t=t_e)$
$v_{rel}$: Relativgeschwindigkeit Objekt-Sensor
analysiert werden.

Untersuchungen haben gezeigt, daß jede Folge G(nT) einen reproduzierbaren objekttypischen Verlauf und spezifische lokale Minima und Maxima aufweist.

Diese Eigenschaften werden zur Identifizierung der Objekte herangezogen.

Hierzu wird zunächst die Folge G(nT) zur Reduzierung der Datenmenge nach der Einführung von Stützstellen durch die verkürzte Folge $\bar{G}(n \cdot kT)$ mit der ganzen positiven Zahl k approximiert.

Die Folge $\bar{G}$ wird anschließend einer Normierung unterworfen, um multiplikative Verzerrungen zu eliminieren.

Der Normierungsfaktor N berechnet sich zu

$$N=\frac{k}{n_{max}+k} \sum_{n=0}^{n_{max}} \bar{G}\ (nkT)$$

und für die Elemente der normierten Folge $\bar{G}_N$ gilt:

$$\overline{G}_N \ (nkT) = \frac{1}{N} \overline{G} \ (nkT).$$

Durch die Normierung wird erreicht, daß bei gleichen Objekten auch unter Einfluß der genannten Verzerrungen vergleichbare Ergebnisse erzielt werden.

Da in der Regel das analoge Ausgangssignal des Sensors 1 über eine Vorverstärkung die volle Auflösungsbreite des A/D-Wandlers 20 nicht ausnutzt, ist auf die Normierung folgend eine Amplitudenverstärkung vorgesehen, um bei dem späteren Vergleich durch Differenzenbildung den gesamten Wertebereich zwecks Erhöhung der Identifizierungsgenauigkeit nutzbar zu machen.

Wird jedem Objekt i eine Folge $\overline{G}_{N, \, i}$ zugeordnet und ist $W_{max}$ der größte digital darstellbare Wert (z.B. $W_{max} = 2^8$), so ist der Verstärkungsfaktor V wie folgt zu berechnen:

$$V = \left| \frac{W_{max}}{\overline{G}_{N, \ max}} \right|$$

mit $\overline{G}_{N, \ max} = \text{Max} \ \{\overline{G}_N \ (nkT)\}_i, \ i = 1, \ 2, \dots$

und für die verstärkte, normierte Folge $\overline{G}_{N, \, i}$ des i-ten Objektes gilt:

$$\overline{G}_{N, \ i} = V \cdot \overline{G}_{N, \ i} \ (nkT).$$

Die für das Flächenmuster charakteristischen Folgen $\hat{G}_{N, \, i}$ werden zusammengefaßt über folgende Schritte erzeugt:

a) Aufnehmen der zweidimensionalen Bildinformation mittels des Sensors 1 (z.B. Zeilen—Array) und Reduzieren in eine eindimensionale (analoge) Information gemäß Fig. 2, 3,

b) Digitalisieren,

c) Datenreduzieren durch Auswahl von Daten an Stützstellen zur Approximation,

d) Normieren und Verstärken.

Bis zu diesem Punkt ist die Vorgehensweise bei der vorherigen ("off-line") Speicherung von Soll-Bildinformationen und Echtzeit-Betrieb ("on-line") zur automatischen Erkennung des Flächenmusters identisch.

Zur Programmierung des Erkennungssystems sind im sogenannten Teach-In-Verfahren für jede später zu identifizierende Objektmenge, z.B. gleicher Titel, gleiche Ausgabe einer Zeitschrift, die Schritte a) bis d) zu durchlaufen und die Objekt-Folgen $\overline{G}_{N, \, i}$ zu speichern.

Eine tabellarische Speicherung ist in der nachfolgenden Tabelle beispielhaft dargestellt.

| Objekt i | $\hat{G}_{N, \ i} = \{G_{ij}\}$ | | | | | | |
|---|---|---|---|---|---|---|---|
| | $G_{i1}$ | $G_{i2}$ | $G_{i3}$ | $G_{i4}$ | | $G_{i, \ m-1}$ | $G_{i, \ m}$ |
| 1 | $G_{11}$ | $G_{12}$ | $G_{13}$ | $G_{14}$ | | — | — |
| 2 | $G_{21}$ | $G_{22}$ | $G_{23}$ | $G_{24}$ | | — | — |
| 3 | $G_{31}$ | $G_{32}$ | $G_{33}$ | $G_{34}$ | | — | — |
| 4 | $G_{41}$ | $G_{42}$ | $G_{43}$ | — | | — | — |
| 5 | $G_{51}$ | $G_{52}$ | — | — | | — | — |
| 6 | $G_{61}$ | $G_{62}$ | . | . | | | |
| . | . | . | . | . | | | |
| . | . | . | . | . | | | |
| . | . | . | | | | | |

Die maximale Anzahl m der Folgenelemente ist dabei a priori zu begrenzen, um die Identifizierung zu beschleunigen und den Speicherbedarf klein zu halten.

Mit den bekannten Daten

$\Delta x_{max} = \text{max} \{x_e - x_a\}_i$,

maximale Objektlänge in Bewegungsrichtung

$v_{rel} = \text{const.}$,

relative Geschwindigkeit Sensor-Objekt gilt:

$$m \leq \frac{f}{k} \cdot \frac{\Delta x_{max}}{v_{rel}} + 1.$$

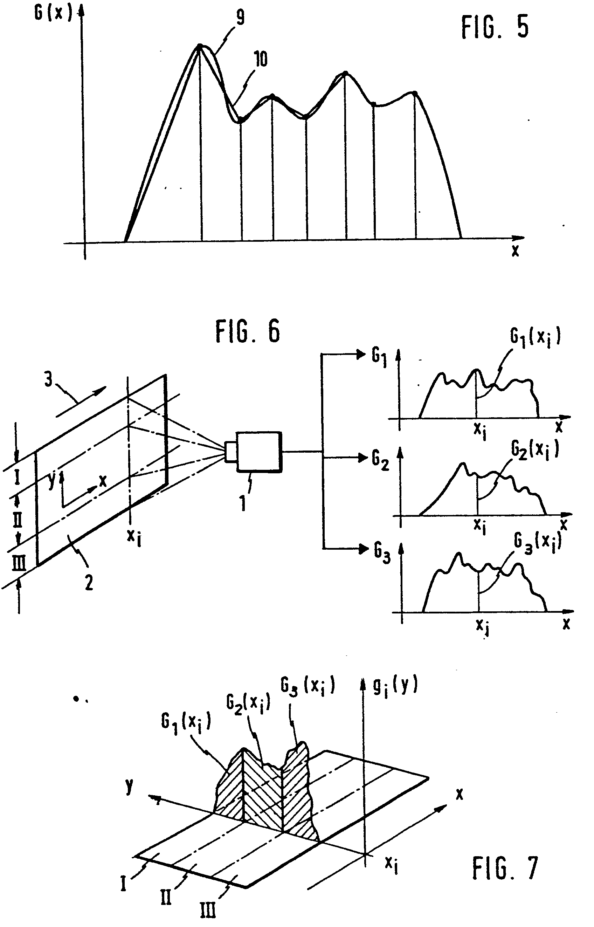

Ein Beispiel für eine Datenreduzierung durch Auswahl von Daten an äquidistanten Stützstellen mit dem konstanten Stützstellenabstand k ist in Fig. 5 gezeigt. Es leuchtet ein, daß sich bei Anwendung eines konstanten Stützstellenabstandes die Flächenmuster an unterschiedlich langen Objekten durch unterschiedlich große Signalfolgen darstellen lassen. Dies gibt ein Vergleichskriterium für das Objektformat an die Hand, was eine Vorauswahl nach der Formatgröße erlaubt. In Fig. 5 ist mit der Bezugszahl 5 die tatsächliche Grauwertverteilung G (x) gemäß Fig. 3, mit der Bezugszahl 6 das aufgrund der Stützstellenunterteilung sich ergebende Approximations-Polygon und mit den Bezugszahlen 7 und 8 untere und obere Fehlerkurven für die maximale bzw. minimale Abweichung von dem Approximations-Polygon 6 dargestellt, die in der Praxis deshalb vorgegeben werden müssen, weil die Aufnahme der Bildinformation real immer nur unter Einfluß unvermeidlicher Störungen erfolgen kann, so daß gleiche Objekte bzw. wiederholte Messungen an ein und demselben Objekt nicht stest zu vollständig identischen Signalfolgen führen können.

Fig. 5 zeigt den Ersatz der tatsächlichen Grauwertverteilung G (x) gemäß Fig. 3, die hier mit der Bezugszahl 9 bezeichnet ist, durch ein Stützstellen-Polygon 10, wobei die Stützstellen an die Maxima bzw. Minima der tatsächlichen Grauwertverteilung 9 gelegt sind.

Die Minima und Maxima werden in üblicher Weise einfach durch Differenzenbildung lokalisiert. Die Vorgehensweise nach Fig. 5 ist in solchen Fällen vorzuziehen, in denen nach der Vorgehensweise gemäß Fig. 4 mit äquidistanten Stützstellen entweder nicht genügend signifikante Unterschiede feststellbar sind oder die Stützstellenanzahl zum Feststellen solcher Unterschiede zu groß gemacht werden muß.

Anhand der Figuren 6 und 7 sie nun eine mehrspurige Bildaufnahme des Flächenmusters auf einem Objekt 2 beschrieben, das wiederum in Richtung 3 an einem ortsfesten, zeilenförmigen Sensor 1 vorbeibewegt wird.

In diesem Fall ist das Objekt in drei Spuren I, II und III unterteilt, deren Breite aus Fig. 6 ersichtlich ist. Die Sensorelemente des zeilenformigen Sensors 1 sind entsprechend zu drei Zeilenabschnitten zusammengefaßt, die jeweils ein integrales Signal $G_1$ für die erste Spur I, $G_2$ für die zweite Spur II und ein Signal $G_3$ für die dritte Spur III liefern.

Für jede Spurbreite wird gemäß Fig. 7 beispielsweise an der Stelle $x_i$ ein getrenntes Grauwertsignal $G_1 (x_i)$, $G_2 (x_i)$ und $G_3 (x_i)$ ermittelt, wobei prinzipiell wie bei der Darstellung nach Fig. 2 jeder dieser Werte das Integral bzw. den Flächenwert des Grauwertes in der betreffenden Spur an der Stelle $x_i$ repräsentiert.

In der diagrammartigen Darstellung rechts in Fig. 6 ist dieser Flächenwert jeweils als Ordinatenwert der Grauwertverteilung in x-Richtung dargestellt, und die untereinander dargestellten Kurven über der x-Koordinate repräsentieren die Grauwertverteilungen in den drei Spuren I, II, III.

Allgemein repräsentiert jedes Signal $G_s = G_s(x(t))$ für jeden Ort x die integrierte Grauwertinformation entlang der Spur s in y-Richtung des Bildobjektes. Zwischen der eindimensionalen und der zweidimensionalen diskreten Information gilt dann die Beziehung:

$$G\ (x(t)) = \sum_{s=1} \qquad G_s\ (x(t)) = \sum_{s=1} \qquad \int_{y_s}^{y_{s+1}} g\ (y)\ dy.$$

Die Informationen $G_s$ eines jeden Objektes werden wahlweise im oben geschilderten Verfahren gemäß Fig. 4 oder gemäß Fig. 5 weiterverarbeitet.

Die getrennte Erfassung des Flächenmusters auf dem Objekt auf unterschiedlichen Spuren ermöglicht eine hohe Auflösung der Bildinformation in Richtung der Sensorachse. Die Spurbreite ist beliebig wählbar, so daß eine beliebige Auswahl von für die Erkennung signifikanter Zonen auf dem Objekt möglich ist.

Allerdings erfordert die Vorgehensweise nach den Fig. 6 und 7 einen größeren numerischen Aufwand und einen erhöhten Speicherbedarf.

Im Extremfall kann jedes Sensorelement des zeilenförmigen Sensors 1 direkt über einen A/D-Wandler 20 mit der Auswerteelektronik verbunden werden, was maximale Bildauflösung in Sensorrichtung, d.h. in y-Richtung, liefert.

Die Anpassungsfähigkeit des Erkennungsverfahrens läßt sich dadurch erhöhen, daß die Sensoren softwareseitig zusammengefaßt werden.

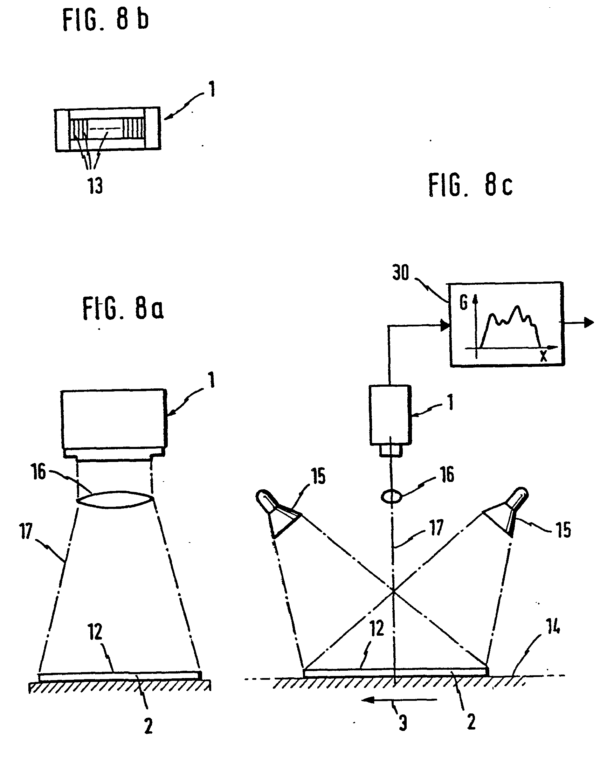

In den Fig. 8a, 8b und 8c ist eine realisierte Vorrichtung zum Erkennen eines Flächenmusters 12 auf einem Objekt 2, wie der Titelseite einer Zeitschrift, dargestellt. Ein optoelektronischer Sensor 1 weist eine Photodioden-Zeile mit bis zu 50 Einzelsensoren 13 auf. Unter dem Sensor 1 wird das Objekt 2 auf einem Objektträger 14, wie einem endlosen Band, liegend entweder in Translationsbewegung oder in Kreisbewegung in Richtung des Pfeiles 3 am Sensor 1 vorbeibewegt. Im Bereich des Sensors 1 wird die mit dem Flächenmuster 12 versehene Oberseite des Objekts 2 mittels Lampen 15 gut ausgeleuchtet. Der von der Objektoberseite ausgehende Strahlengang 17, der in Fig. 8c nur als Strich bzw. Streifen zu sehen ist, wird über eine Optik 16 den Sensorelementen 13 des Sensors 1 zugeführt.

An den Sensor 1 ist eine Auswertevorrichtung 30 angeschlossen, welche die zweidimensionale Bildinformation in eine digitalisierte eindimensionale Bildinformation gemäß Fig. 3 bzw. gemäß den Figuren 4 und 5 umwandelt.

Die Auswertevorrichtung 30 bildet Teil einer Erkennungsvorrichtung, wie sie in Fig. 9 beispielhalf dargestellt ist.

Von den Sensorelementen der verschiedenen Spuren I, II, III ... M nach Fig. 6 bzw. 7 werden Ausgangssignale in entsprechende nachgeschaltete Auswertevorrichtungen 30 abgegeben. Diese Auswertevorrichtungen 30 liefern digitalisierte Ausgangssignale für die in der jeweiligen Spur über die Länge des Objektes 2 enthaltene Grauwertverteilung und führen diese Information einem Vergleicher 31 zu. Dieser Vergleicher erhält außerdem vorher in den gleichen Spuren gespeicherte Soll - Grauwertinformationen aus einem Referenzdatenspeicher 32. Die zu den einzelnen Spuren korrespondierenden Werte werden in dem Vergleicher 31 verglichen, und das Ergebnis wird einer Abfragevorrichtung 33 zugeführt. Ist das Ergebnis negativ, d.h. ergibt der Vergleich eine signifikante Abweichung zwischen Ist-Grauwertverteilung aus einer Auswählvorrichtung 30 und Soll-Grauwertverteilung aus dem Referenzdatenspeicher 32, so wird ein Ausgangssignal über die Leitung 34 zu einer Zielsteuerung 35 abgegeben, welche das Ausschleusen des Objektes und ggf. ein visuelles Identifizieren auslöst.

Ist das Vergleichsergebnis jedoch positiv, d.h. wird das Flächenmuster auf dem Objekt als richtig erkannt, so wird ein Signal über eine Leitung 36 zu einer Zielsteuerung 37 abgegeben, welche veranlaßt, daß das Objekt an einen gewünschten Ort befördert wird.

Zum Einschreiben der Soll-Grauverteilung in den Referenzdaten-Speicher 32 wird ein vorbestimmtes Flächenmuster auf einem Objekt über die Sensorzeile 1 und die nachgeschalteten Auswertevorrichtungen 30 unter Umgehung des Vergleichers 31 direkt in den Referenzdatenspeicher 32 eingegeben.

In Fig. 10 ist der Aufbau der Auswertvorrichtung 30 in einzelnen gezeigt. Die von den Sensorelementen 13 ausgehenden Signale werden nach Integration in einer Integriervorrichtung 27 über einen Analog/Digital-Wandler 20 und eine Auswählvorrichtung 28 in eine normierende Parallelschaltung aus einem Summierer 21 und einem Zwischenspeicher 22 eingespeichert, deren Ausgangssignale einem Divisor zugeführt werden. Das Ausgangssignal des Divisors 23 wird in einem Verstärker 24 verstärkt und entweder zum Einschreiben der Soll-Grauwertverteilung direkt in den Referenzdatenspeicher 32 eingeschrieben oder zu automatischen Erkennung eines Objektes gemäß Fig. 9 dem Vergleicher 31 zugeführt, der dann einen Vergleich mit den Soll-Daten aus dem Referenzdatenspeicher 32 wie beschrieben vornimmt.

Fig. 11 zeigt in einem Flußdiagramm den Einbau einer Erkennungsvorrichtung, die gemäß den Fig. 8 bis 10 aufgebaut ist, in eine automatische Verteileranlage für Objekte, wie Druckerzeugnisse.

Die Erkennungsvorrichtung insgesamt ist dabei von einer gestrichelten Linie umgeben und mit dem Bezugszeichen 40 bezeichnet. Von einer Objekt-Bereitstellung her findet an einer Station 41 eine Objektvereinzelung und eine Übergabe auf den bewegten Objektträger 14 (Fig. 8c) statt. Mittels des hier als Kasten dargestellten Sensors 1 wird die Bildinformation aufgenommen und einer insgesamt mit dem Bezugszeichen 42 bezeichneten Verarbeitungsvorrichtung gemäß den Fig. 9 und 10 zugeführt. Zur Vorrichtung 42 gehört eine Ein-/Ausgabe-Einheit 43. Ferner ist der Vorrichtung 42 eine Zielsteuerung 44 nachgeschaltet, welche auf eine Förderanlage 45 einwirkt und dort bei Fehlerkennung über einen Kanal 46 das Ausschleusen des nicht erkannten Objektes oder bei Erkennen über einen Kanal 47 das Fördern zu einem Zielpunkt bewirkt.

Mit dem beschriebenen Verfahren und der beschriebenen Vorrichtung lassen sich Nachteile vermeiden, die bei Anwendung von Zeilenkameras oder Fernsehkameras entstehen würden: Der Sensor 1 erfaßt momentan des Flächenintegral der Grauwerte der Gesamt- oder einen Teilfläche des Flächenmusters, ist somit prinzipiell schneller als punktweise abtastende Zeilen- oder Fernsehkameras, deren Abtastgeschwindigkeiten im Vergleich zur Geschwindigkeit durchlaufender Objekte sehr groß sein müssten und bei denen eine Flächenintegration durch nachgeschaltete Techniken, mit Operationsverstärken oder mittels Rechner, realisiert werden, müßte, was zu Echtzeitproblemen führen dürfte.

**Patentansprüche**

1. Einrichtung zum optischen Erkennen von Flächenmustern an Objekten, wobei der optische Grauwert eines Ist-Flächenmusters in mindestens einer Vorzugsrichtung des Objektes mittels einer optoelektronischen Vorrichtung im Auflichtverfahren streifenweise aufgenommen wird, in einer Integriervorrichtung (27) für jeden aufgenommenen Streifen das Integral der Grauwert-Amplituden gebildet wird und in einer der Integriervorrichtung (27) nachgeschalteten Auswertvorrichtung (30) aus den Integralen der Grauwert-Amplituden in einer Richtung senkrecht zur Vorzugsrichtung eine Grauwert-Funktion gebildet wird, die mit einer gespeicherten, ein Soll-Flächenmuster repräsentierenden Funktion mittels eines Vergleichers verglichen wird, gekennzeichnet durch einen bewegten beleuchteten Objektträger (14), einen Fotodiodenzeilen-Sensor (1) für die streifenweise Grauwertaufnahme des Flächenmusters auf dem vom Objektträger transportierten Objekt, und eine in der Auswertvorrichtung (30) enthaltene Auswählvorrichtung (28) zum Auswählen bestimmter Grauwert-Amplitudensignale an für die Grauwertfunktion charakteristischen Stützstellen.

2. Einrichtung nach Anspruch 1, dadurch gekennzeichnet, daß die Stützstellen äquidistant sind.

3. Einrichtung nach Anspruch 1, dadurch gekennzeichnet, daß die Stützstellen an Orte von Maxima und/oder Minima der Grauwertfunktion gelegt sind.

4. Einrichtung nach einem der Ansprüche 1 bis 3, dadurch gekennzeichnet, daß der Fotodiodenzeilen-Sensor zahlreiche Einzelsensoren (13) aufweist, die in einer Zeile quer zur Bewegungsrichtung des Objektes ausgerichtet sind.

5. Einrichtung nach einem der Ansprüche 1 bis 4, dadurch gekennzeichnet, daß die Auswertvorrichtung (30) einen Analog-/Digitalwandler (20), eine daran anschließende Parallelschaltung aus einem Summierer (21) und einem Zwischenspeicher (22), einen durch die Ausgänge des Summierers und des Zwischenspeichers beaufschlagten Divisor (23) und einen diesem nachgeschalteten Verstärker (24) umfaßt.

6. Einrichtung nach einem der Ansprüche 1 bis 5, dadurch gekennzeichnet, daß dem Vergleicher (31) eine Abfragevorrichtung (33) und dieser wiederum zwei entsprechend dem Ergebnis der Erkennungs-Abfrage wahlweise ansteuerbare Signalgeber (35, 37) für das alternative Weiterbehandeln bei Erkennen oder Ausschleusen bei Nichterkennen nachgeschaltet sind.

7. Einrichtung nach einem der Ansprüche 1 bis 6, dadurch gekennzeichnet, daß der Fotodiodenzeilen-Sensor (1) mehrere Gruppen (I, II, III) von Einzelsensoren (13) aufweist, welche das Flächenmuster in mehreren parallelen, vorzugsweise in Bewegungsrichtung des Objektes verlaufenden Spuren aufnehmen, daß jeder von einer Gruppe von Einzelsensoren (13) aufgenommene Streifen sich nur über die Breite einer Spur erstreckt und daß je Gruppe (I, II, III) eine gesonderte Auswertvorrichtung (30) vorgesehen ist.

8. Einrichtung nach einem der Ansprüche 1 bis 7, dadurch gekennzeichnet, daß die Objekte von Druckerzeugnissen, wie Zeitschriften, gebildet sind.

9. Einrichtung nach einem der Ansprüche 1 bis 8, dadurch gekennzeichnet, daß der Fotodiodenzeilen-Sensor (1) quer zur Beuergungsrichtung des Objektträgers angeordnet ist.

10. Verfahren zum optischen Erkennen von Flächenmustern an Objekten, wobei ein Ist-Flächenmuster aufgenommen und mit einem gespeicherten Soll-Flächenmuster verglichen wird, wobei der optische Grauwert des Ist-Flächenmusters in mindestens einer Vorzugsrichtung des Objektes streifenweise aufgenommen wird, für jeden aufgenommenen Streifen das Integral der Grauwert-Ist-Amplitude gebildet wird und zum Vergleich eine das Integral des Grauwertes für den entsprechenden Streifen des Sollflächenmusters repräsentierende, vorher gespeicherte Größe mit dem Integral der aufgenommenen Grauwert-Amplituden verglichen wird, dadurch gekennzeichnet, daß das Objekt relativ zu einer Echtzeit-Aufnahmevorrichtung bewegt wird, und daß die zweidimensional und analog aufgenommenen Grauwert-Amplituden durch streifenweise Echtzeit-Integration in eine eindimensionale, mit einer Abmessung des Flächenmusters variable Grauwertfunktion gewandelt werden, daß diese analoge Grauwertfunktion digitalisiert wird und daß die Datenmenge der digitalisierten Grauwertfunktion durch Herausgreifen einzelner Daten an in Richtung der genannten Abmessung aufeinander folgenden Stützstellen reduziert wird, welche an für die Grauwertfunktion charakteristische Stützstellen gelegt sind.

**Revendications**

1. Dispositif pour la reconnaissance optique de graphismes plats sur des objets, selon lequel la valeur optique de gris d'un graphisme plat réel est enregistrée par trames dans au moins une direction préférentielle de l'objet, par l'intermédiaire d'un dispositif opto-électronique utilisant le procédé d'éclairage par réflexion, l'intégrale des amplitudes des valeurs de gris de chaque trame enregistrée étant réalisée dans un intégrateur (27), et un analyseur (30) connecté avec l'intégrateur (27) établissant à partir des intégrales les amplitudes des valeurs de gris, dans le sens vertical par rapport au sens préférentiel, une fonction de valeurs de gris qui est comparée par l'intermédiaire d'un comparateur avec une fonction préalablement mémorisée, représentant un graphisme plat de référence, caractérisé par:
un porte-objet mobile éclairé (14),
une barrette détectrice à photodiodes (1) pour l'enregistrement par trames de la valeur de gris du graphisme plat sur l'objet déplacé par le porte-objets, et
un sélecteur (28) contenu dans l'analyseur (30) pour la sélection de signaux d'amplitudes déterminées des valeurs de gris, en des points fixes caractéristiques de la fonction des valeurs de gris.

2. Dispositif selon la revendication 1, caractérisé en ce que les points fixes sont équidistants.

3. Dispositif selon la revendication 1, caractérisé en ce que les points fixes sont positionnés aux endroits maxima et/ou minima de la fonction des valeurs de gris.

4. Dispositif selon l'une des revendications 1 à 3, caractérisé en ce que la barrette détectrice à photodiodes comprend plusieurs détecteurs individuels (13) alignés dans le sens transversal par rapport au sens de déplacement de l'objet.

5. Dispositif selon l'une des revendications 1 à 4, caractérisé en ce que l'analyseur (30) comprend un convertisseur analogique-numérique (20), un circuit parallèle raccordé à ce dernier, composé d'un additionneur (21) et d'une mémoire intermédiaire (22), ainsi qu'un diviseur (23) alimenté par les sorties de l'additionneur et de la mémoire intermédiaire, et un amplificateur (24) connecté avec ce dernier.

6. Dispositif selon l'une des revendications 1 à 5, caractérisé en ce qu'avec le comparateur (31) connecté un élément de balayage (33), lui-même connecté avec deux postes transmetteurs de signaux (35, 37) pouvant être sélectionnés au choix, selon le résultat du balayage d'identification, pour le traitement ultérieur alternatif en cas d'identification ou bien pour l'extraction en cas de non-identification.

7. Dispositif selon l'une des revendications 1 à 6, caractérisé en ce que la barrette détectrice à photodiodes (1) comprend plusieurs groupes (I, II, III) de détecteurs individuels (13) qui enregistrent le graphisme plat sur plusieurs pistes parallèles, orientées de préférence dans le sens du déplacement de l'objet, en ce que chaque trame enregistrée par un groupe de détecteurs individuels (13) ne s'étend que sur la largeur d'une piste, et en ce qu'un analyseur séparé (30) est prévu pour chaque groupe (I, II, III).

7

8. Dispositif selon l'une des revendications 1 à 7, caractérisé en ce que les objets sont constitués par des produits imprimés tels que des revues.

9. Dispositif selon l'une des revendications 1 à 8, caractérisé en ce que la barrette détectrice à photodiodes (1) est disposée transversalement par rapport au sens de déplacement du porte-objets.

10. Procédé pour la reconnaissance optique de graphismes plats sur des objets, selon lequel un graphisme plat réel est enregistré et comparé avec un graphisme plat de référence mémorisé, la valeur optique de gris du graphisme plat réel étant enregistrée par trames dans au moins un sens préférentiel de l'objet, l'intégrale de l'amplitude réelle de la valeur de gris étant réalisée pour chaque trame enregistrée, et une grandeur préalablement mémorisée, représentant l'intégrale de la valeur de gris pour la trame correspondante du graphisme plat de référence étant comparée à l'intégrale des amplitudes des valeurs de gris enregistrées, caractérisé en ce que l'objet est déplacé en temps réel par rapport à un dispositif de prise de vues, en ce que les amplitudes des valeurs de gris enregistrées en deux dimensions et de manière analogique sont transformées par intégration en temps réel des trames en une fonction de valeurs de gris unidimensionnelle, variable avec une dimension du graphisme plat, en ce que cette fonction analogique des valeurs de gris est convertie en fonction numérique, et en ce que l'ensemble des données obtenues pour la fonction des valeurs de gris numérisée est réduit par extraction de données individuelles en des points fixes se succédant suivant ladite dimension, placés aux points fixes caractéristiques de la fonction des valeurs de gris.

## Claims

1. Apparatus for the optical recognition of area patterns on objects, the optical grey value of an actual area pattern being recorded stripwise by the incident light method by an opto-electronic device in at least one preferential direction of the object, the integral of the grey value amplitudes being formed in an integrator (27) for each recorded strip and a grey value function being formed from the integral of the grey value amplitudes in a direction perpendicular to the preferential direction in an evaluator (30) following the integrator (27), said grey value function being compared by a comparator with a stored function representing a set-value area pattern, characterised by a moving illuminated object carrier (14), a photo-diode line sensor (1) for the stripwise recording of the grey value of the area pattern on the object transported by the object carrier, and a selector (28) contained in the evaluator (30) for selecting specific grey value amplitude signals at support points characteristic of the grey value function.

2. Apparatus according to claim 1, characterised in that the support points are equidistant.

3. Apparatus according to claim 1, characterised in that the support points are situated at locations of maximum and/or minimum values of the grey value function.

4. Apparatus according to any one of claims 1 to 3, characterised in that the photo-diode line sensor comprises numerous individual sensors (13) aligned in a line transversely to the direction of movement of the object.

5. Apparatus according to any one of claims 1 to 4, characterised in that the evaluator (30) comprises an analog/digital converter (20), followed by a parallel circuit consisting of a summator (21) and an intermediate memory (22), a divider (23) receiving the outputs of the summator and the intermediate memory, and an amplifier (24) following the divider (23).

6. Apparatus according to any one of claims 1 to 5, characterised in that the comparator (31) is followed by an interrogator (33) which is in turn followed by two signal generators (35, 37) which can be triggered optionally according to the result of the recognition interrogation for alternative further processing on recognition or discarding on non-recognition.

7. Apparatus according to any one of claims 1 to 6, characterised in that the photo-diode line sensor (1) comprises a plurality of groups (I, II, III) of individual sensors (13) which record the area pattern in a plurality of parallel tracks extending preferably in the direction of movement of the object, each strip recorded by a group of individual sensors (13) extends over only the width of one track, and a separate evaluator (30) is provided for each group (I, II, III).

8. Apparatus according to any one of claims 1 to 7, characterised in that the objects are printed products, such as periodicals.

9. Apparatus according to any one of claims 1 to 8, characterised in that the photodiode line sensor (1) is disposed transversely of the direction of movement of the object carrier.

10. A method of optically detecting area patterns on objects, in which an actual area pattern is recorded and is compared with a stored set-value area pattern, the optical grey value of the actual area pattern being recorded stripwise in at least one preferential direction of the object, the integral of the actual grey value amplitudes is formed for each recorded strip and, for comparison purposes, a previously stored value representing the integral of the grey value for the corresponding strip of the set-value area pattern is compared with the integral of the recorded grey value amplitudes, characterised in that the object is moved relatively to a real-time recorder and the grey value amplitudes recorded in two-dimensional and analog form are converted, by stripwise real-time integration, to a mono-dimensional grey value function variable with a dimension of the area pattern, said analog grey value function is digitized, and the amount of data of the digitized grey value function is reduced by removal of individual data at support points consecutive in the direction of the said dimension, which are situated at support points characteristic of the grey value function.

FIG. 1

FIG. 2

FIG. 3

FIG. 4

FIG. 5

FIG. 6

FIG. 7

FIG. 8 b

13

FIG. 8 c

FIG. 8 a

FIG. 9

FIG. 10

FIG. 11